(19)

Europäisches
Patentamt
European
Patent Office
Office européen
des brevets

(11) **EP 2 194 325 A1**

(12) **EUROPEAN PATENT APPLICATION**

(43) Date of publication:
**09.06.2010 Bulletin 2010/23**

(51) Int Cl.:
*F23N 5/16* (2006.01)

(21) Application number: **08170452.0**

(22) Date of filing: **02.12.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Haffner, Ken Yves**<br>  **CH-5400, Baden (CH)**<br>• **Pape, Detlev**<br>  **CH-5415, Nussbaumen (CH)** |
| (71) Applicant: **ABB Research Ltd.**<br>**8050 Zürich (CH)** | (74) Representative: **ABB Patent Attorneys**<br>**C/o ABB Schweiz AG**<br>**Intellectual Property (CH-LC/IP)**<br>**Brown Boveri Strasse 6**<br>**5400 Baden (CH)** |

(54) **Flame detection device and method for detecting a flame**

(57)  An acoustic sensor device (100) which is adapted for detecting at least one property of an interface between a flame medium of a flame (201) to be investigated and an ambient medium of the flame (201) is provided. The acoustic sensor device (100) includes an acoustic transmitter (101) which transmits an acoustic wave (105) towards a flame location of the flame (201). Furthermore, an acoustic receiver (102) adapted for receiving a modified acoustic wave from the flame location and for outputting a receiver signal on the basis of the modified acoustic wave is provided. A processing unit which is operatively connected to the acoustic receiver (102) processes the outputted receiver signal and derives the at least one interface property on the basis of the processed receiver signal.

FIG. 3

**EP 2 194 325 A1**

**Description**

**BACKGROUND**

The present disclosure generally relates to a measurement of interface properties between a flame to be investigated and an ambient medium of the flame, and in particular relates to a flame detection device and a method for detecting a flame.

The measurement of a flame status is an important issue, e.g. in combustion processes. In such a combustion process, at least one burner is used which is capable of producing heat by burning different kinds of fuels. Burners may be small devices adapted for the use in household applications such as hot water boilers or larger multi-burner configurations employed in industry or power plants.

A common problem faced with such burners used in an industrial or household environment is a monitoring of an on/off-state of a burner flame. For example, it is a critical safety risk, if these kinds of burners are supplied with fuel under a condition when the flame is not burning. If a surrounding burning chamber is filled with fuel without a burning flame, the fuel will accumulate such that a sudden ignition of this fuel might cause to an explosion.

Other applications where a burning status of a flame provided by a burner is critical are situations where a fuel supply has to be monitored or where a burning process has to be identified.

Therefore, a secure detection of a burning status of a flame generated by different kinds of burners has to be provided.

**SUMMARY**

In view of the above an acoustic sensor device adapted for detecting at least one property of an interface between a flame medium of a flame to be investigated and an ambient medium of the flame to be investigated is provided, the sensor device including an acoustic transmitter adapted for transmitting an acoustic wave towards a flame location of the flame to be investigated, an acoustic receiver adapted for receiving a modified acoustic wave from the flame location and for outputting a receiver signal on the basis of the modified acoustic wave, and a processing unit operatively connected to the acoustic receiver and adapted for processing the outputted receiver signal and for deriving the at least one interface property of the interface between the flame medium of the flame and an ambient medium of the flame on the basis of the processed receiver signal.

According to another aspect a method for detecting at least one property of an interface between a flame medium of a flame to be investigated and an ambient medium of the flame to be investigated is provided, the method including the steps of providing an acoustic transmitter, transmitting an acoustic wave from the acoustic transmitter towards a flame location of the flame to be investigated, receiving a modified acoustic wave from the flame location by means of an acoustic receiver, outputting a receiver signal on the basis of the modified acoustic wave, and processing the receiver signal output from the acoustic receiver such that the at least one interface property of the interface between the flame medium of the flame and an ambient medium of the flame on the basis of the processed receiver signal is derived. According to another aspect a multi-sensor apparatus adapted for detecting at least one property of an interface between a plurality of flames to be investigated and ambient media of the plurality of flames, comprising a plurality of acoustic sensor devices as described herein.

Alternatively, multi-sensor apparatus may comprise a common processing unit instead of respective individual processing units of each of the plurality of sensor devices. The common processing unit is then operatively connected to each of the acoustic receivers of the plurality of sensor devices and adapted for processing the outputted receiver signals and for deriving the respective interface property of the interface between the respective flame medium of the respective flame and an ambient medium of the respective flame on the basis of the processed receiver signal. The common processing unit may further be adapted to derive a common property of the plurality of flames, such as a measure for the distribution and / or the correlation of any flame property of the individual flames.

Further exemplary embodiments are according to the dependent claims, the description and the accompanying drawings.

**DRAWINGS**

A full and enabling disclosure, including the best mode thereof, to one of ordinary skill in the art is set forth more particularly in the remainder of the specification including reference to the accompanying drawings wherein:

Fig. 1 shows a principle arrangement of a flame detection device for detecting the burning status of a flame to be investigated;

Fig. 2 shows a block diagram illustrating an acoustic sensor device attached at a burning chamber by means of an acoustic waveguide, according to a first typical embodiment;

Fig. 3 is a block diagram illustrating an acoustic sensor device adapted for transmitting an acoustic wave through a region of interest, e.g. through the flame to be investigated, according to another typical embodiment;

Fig. 4 is a top view of an acoustic sensor device adapted for detecting a flame boundary wherein the acoustic sensor device is operating in a reflection mode, according to yet another typical embodiment;

Fig. 5 shows a graph illustrating a variation of an acoustic impedance from an environmental region to a flame region;

Fig. 6 is a graph showing several detection signals obtained with a flame in an on-state and without flame, respectively; and

Fig. 7 is a flowchart illustrating a method for detecting at least one property of an interface between a flame medium of a flame to be investigated and an ambient medium.

## DETAILED DESCRIPTION

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield yet a further embodiment. It is intended that the present disclosure includes such modifications and variations.

A number of embodiments will be explained below. In this case, identical structural features are identified by identical reference symbols in the drawings. The structures shown in the drawings are not depicted true to scale but rather serve only for the better understanding of the embodiments.

A sensor device adapted for detecting at least one property of an interface between a flame medium of a flame to be investigated and an ambient medium of the flame to be investigated transmits an acoustic wave towards a flame location and receives a modified acoustic wave from the flame location. The transmitted wave is modified on the basis of interface properties of the interface between the flame medium and the environmental medium of the flame.

It is noted here that the term "interface" is used to describe any change of an acoustic impedance between an ambient medium of the flame to be investigated and a flame medium. A flame front (flame boundary) may be such an interface because a rapid temperature change results in a (gas) density change between an out-of-flame region and an in-flame region. Such density change entails a change in acoustic impedance, as described herein below with respect to equation (1). Thus a reflection of an acoustic signal at such kind of interface occurs which results in a corresponding change of an acoustic transmission through the flame, too. At the acoustic interface a change in the acoustic impedance is not necessarily a step function, but a smooth transition can also be present. Therefore it is not required that the boundary between the flame to be investigated and the ambient medium is a flat surface. A stepwise change of the acoustic impedance is not required in order to receive a change in the reflection or transmission of the acoustic wave. Rather a variation of the acoustic impedance may exhibit an arbitrary function.

An acoustic wave which is transmitted towards the flame location of the flame to be investigated is not blocked by dust and/or ashes in the burning chamber such that a failure of the sensor device can be avoided. The modified acoustic wave which is received at an acoustic receiver does only depend on properties of an interface between the flame medium and the ambient medium of the flame and does not depend on other physical properties of the flame such as a light emission spectrum.

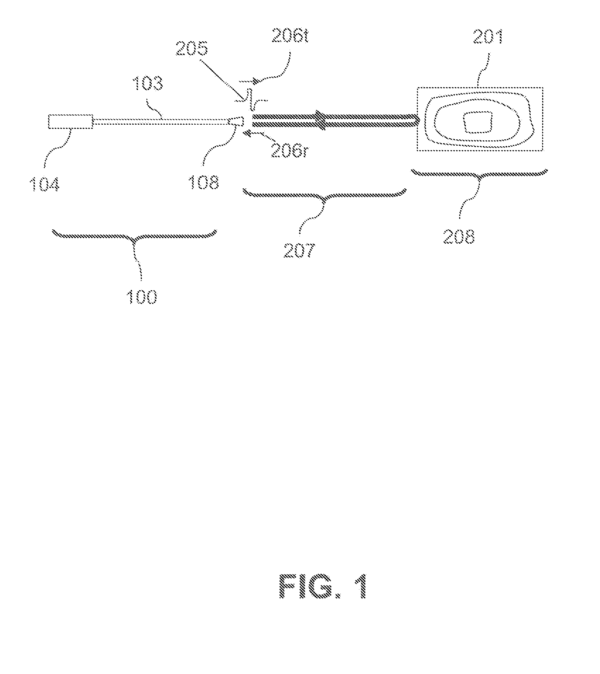

Fig. 1 illustrates a principle set-up for detecting at least one flame property of a flame to be investigated by means of an acoustic wave.

An acoustic sensor device 100 includes a transceiver unit 104 adapted for transmitting and receiving an acoustic wave 205. The acoustic wave 205 is generated by means of the transceiver unit 104 and propagates through an acoustic waveguide 103 in a signal propagation direction 206t towards a flame to be investigated 201.

The flame to be investigated 201 defines a region where specific properties of a flame medium are present, such as high temperature and low gas density as compared to the environment of the flame. This region is referred to as a burning region 208. Outside this burning region 208, a non-burning region 207 defines a region where a flame is no longer present. The properties in the non-burning region 207 correspond to unburnt medium of the environment of the flame to be investigated 201. An acoustic wave 205 which has been transmitted from the transceiver unit 104 travels in the direction 206t towards the flame to be investigated 201 and is partially reflected at a boundary of the flame 201 to be investigated. In the set-up shown in Fig. 1, the reflected acoustic wave propagates in a direction 206r back towards the transceiver unit 104.

The acoustic sensor device 100 may include an antenna 108 for directing the acoustic wave 205 output from the acoustic waveguide 103 towards the location of the flame to be investigated 201.

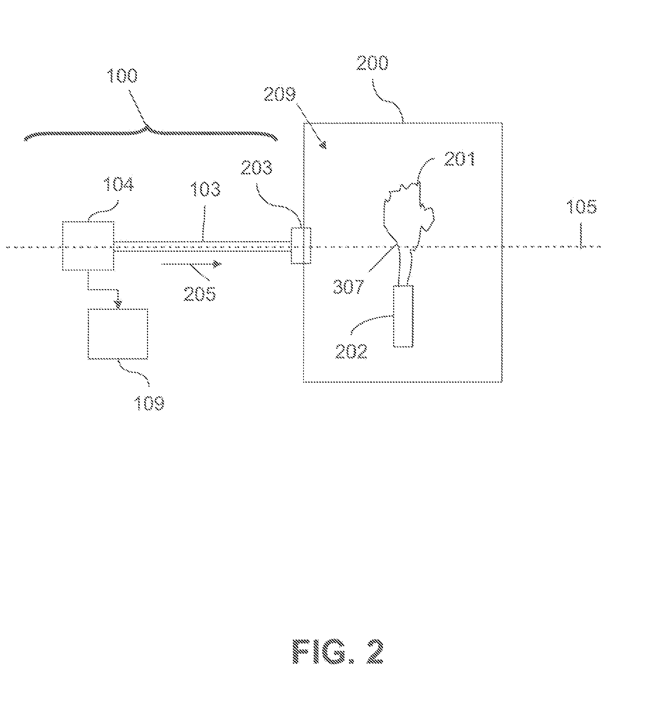

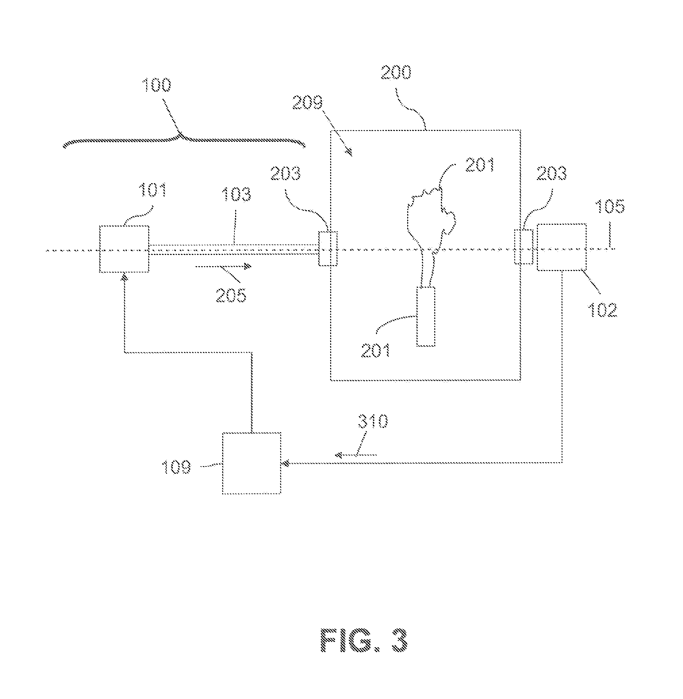

The shape of the acoustic wave, e.g. the waveform of the acoustic wave 205 may change upon reflection at the interface between the flame medium and the ambient medium. A processing unit which will be described with respect to Figs. 2 and 3 herein below is adapted for determining a time-of-flight of the acoustic wave 205 between an instant of transmitting and an instant of receiving this wave. Thus, other properties of the flame to be investigated 201 may be determined such as a lateral extension of the flame. It is noted here that an intensity of the acoustic wave 205 propagating in the direction 206r, i.e. from the burning region 206 towards the antenna 108 of the acoustic waveguide 103, may be zero in a case when the flame is not present, i.e. in an off-state of the flame. Thus, the processing unit 209 can determine whether the flame is in an on-state or in an off-state.

Fig. 2 is a block diagram illustrating an acoustic sensor device 100 arranged at a burning chamber 200. A measurement path is indicated by a broken line, reference numeral 105. The measurement path 105 is arranged such that an acoustic wave 205 may travel from the transceiver unit 104 along the acoustic waveguide 103 towards an impedance matching unit 203 which is adapted for matching an acoustic impedance of the acoustic waveguide 103 to the acoustic impedance of the interior of the burning chamber 200.

In the arrangement shown in Fig. 2, an antenna is not required, because the acoustic waveguide is directly coupled to the acoustic chamber 200. An antenna, however, may be provided within the acoustic chamber 200, albeit not shown. The acoustic path 105 intersects the region of the flame 201 to be investigated. The flame 201 is generated by a burner 202 which may be arranged within the burning chamber 200, as shown in Fig. 2, or outside the burning chamber 200.

It is noted here that burners 202 may be small devices adapted for the use in household applications such as hot water boilers, or larger multi-burner configurations employed in industry or power plants.

The transceiver unit 104 is controlled by the processing unit 109, wherein the processing unit 209 receives a signal indicating a reflexion of the acoustic wave 205 at a flame front position 307, i.e. at a region where an interface between the flame medium of the flame 201 to be investigated and an ambient medium 209 within the burning chamber 200 is present. At the flame front (flame boundary) 307, at least a part of the acoustic wave 205 is reflected, wherein the remaining part of the acoustic wave 205 is transmitted through the flame 201.

The acoustic wave 205 may be provided as a continuous wave having a modulation or by a pulsed wave. A continuous acoustic wave such as a sinusoidal wave is preferred if a (continuous) phase difference measurement between the transmitted acoustic wave and the reflected acoustic wave is carried out. If a pulsed wave is used as the acoustic wave 205, individual acoustic pulses are reflected at the interface between the flame 201 to be investigated and the ambient medium 209 such that a time-of-flight measurement between transmitted and reflected acoustic waves may be performed.

The acoustic wave 205 propagates through at least two different media, i.e. the medium of the flame 201 to be investigated and the ambient medium 209. Acoustical impedances of the two media 201, 209 are different, as will be explained with respect to the following equations. The acoustical impedance in a medium having a density $\rho$ and a sound velocity c is in accordance with the following equation (1):

$$z = \rho \cdot c \qquad\qquad\qquad (1)$$

From the impedance, the reflected and transmitted amplitudes R and $T_r$, respectively, may be evaluated. The portion of the reflected wave of the acoustic wave 205 is represented by the reflection coefficient according to:

$$R = \frac{z_2 - z_1}{z_1 + z_2} \qquad\qquad\qquad (2)$$

As can be seen from the above equation (2), a reflected wave occurs if an acoustic impedance of the flame 201 to be investigated ($z_1$) is different from the acoustic impedance $z_2$ of the ambient medium. The reflections can occur at the interface between two different materials, e.g. at interfaces solid/gas, but also inside a medium having varying properties change, e.g. due to temperature, chemical reactions or pressure modifications.

Furthermore, a transmitted portion of the acoustic wave 205 (a transmission coefficient) is given by the following equation (3):

$$Tr = 2 \cdot \frac{z_2}{z_1 + z_2} \qquad (3)$$

As will be described herein below with reference to Fig. 3, the transceiver unit 104 may be replaced by a separate acoustic transmitter 101 and an acoustic receiver 102 which are arranged opposite to each other such that the transmitted wave in accordance with equation (3) above may be evaluated.

It is noted here that the different acoustical impedances $z_1$, $z_2$ mainly result from differences in temperatures of the medium of the flame 201 to be investigated as compared to the ambient medium 209. In accordance with Dalton's law and assuming a constant pressure throughout the burning chamber 200 (at in-flame and out-of-flame regions), the following relation (4) applies:

$$p \sim \rho \cdot k \cdot T \qquad (4)$$

As can be seen from equation (4) above, for constant pressure p the density $\rho$ and the temperature T are inversely proportional to each other, wherein k is Boltzmann's constant. The density $\rho$ may be expressed as a number of particles per unit volume such that the following equation (5) applies:

$$\rho \sim \frac{p}{kT} \qquad (5)$$

With respect to the above equations (4) and (5), the density in a medium is inversely proportional to the temperature T. Assuming only minor changes of the sound velocity c (equation (1) above) in the medium of the flame 201 to be investigated with respect to the ambient medium 209, the impedance of a medium thus decreases with increasing temperature, as can be evaluated by combining the above equations (1) and (5). Thus, the hot flame operating at an elevated temperature T results in a decreased acoustical impedance $z_1$, whereas the acoustical impedance of the surrounding medium (ambient medium) 209 remains at a value $z_2$.

It is noted that the transceiver unit 104 according to Fig. 2 only receives a reflected acoustic wave if the two impedances $z_1$, $z_2$ of the flame 201 to be investigated and the ambient medium 209 are different, as can be seen from equation (2) above.

A transmission of an acoustic wave 205 through the flame 201 to be investigated is strongly dependent on the acoustic impedance of the flame 201 to be investigated. This situation is evaluated using the equation (2) above. The transmission coefficient $T_r$ decreases from a maximum value of 1 (100%) when no flame is present ($z_1 = z_2$) to a value lower than 100%.

It is noted here that it is not required that the boundary between the flame 201 to be investigated and the medium 209 is a flat surface, the variation of the acoustic impedance rather may exhibit an arbitrary function. Thus, a stepwise change of the acoustic impedance is not required in order to receive a change in the reflection or transmission of the acoustic wave 205.

Fig. 3 is an acoustic sensor device 100 arranged at a burning chamber 200, according to another typical embodiment. As shown in Fig. 3, the burning chamber 200 is provided with two impedance matching units 203, one at the entrance of the acoustic wave 205 into the burning chamber 200 and one at the exit of a part of the acoustic wave 205 towards the outside of the burning chamber 200.

As compared to the acoustic sensor device 100 shown in Fig. 2, the acoustic sensor device 100 shown in Fig. 3 includes separate transmitter and receiver units, i.e. an acoustic transmitter 101 adapted for transmitting an acoustic wave towards a flame location of the flame 201 to be investigated and an acoustic receiver 102 adapted for receiving a modified acoustic wave (a transmitted acoustic wave) from the flame location and for outputting a receiver signal 310 on the basis of the modified acoustic wave.

It is noted here that, albeit in the configuration shown in Fig. 3 a reflected acoustic wave is present, the reflected acoustic wave is not detected in this case.

In accordance with the equation for the transmission coefficient Tr (equation (3) above), the transmitted acoustic wave 205 is modified if a flame 201 to be investigated is present in the measurement path 105.

Furthermore the arrangement shown in Fig. 3 includes two impedance matching units 203. Thus an acoustic impedance outside the burning chamber 200 is matched to an acoustic impedance inside the burning chamber 200 using the two impedance matching units 203.

As a consequence of a straight propagation of the acoustic wave 205 along the measurement path 105, the acoustic wave 205 can be directed towards a specific flame 201 to be investigated in a case where two or more flames are present (not shown in Fig. 3. Thus, e.g. in a multi-burner configuration, separate acoustic sensor devices 100 may be provided in order to measure properties (on/off-states etc.) of a plurality of flames using an appropriate number of acoustic sensor devices 100.

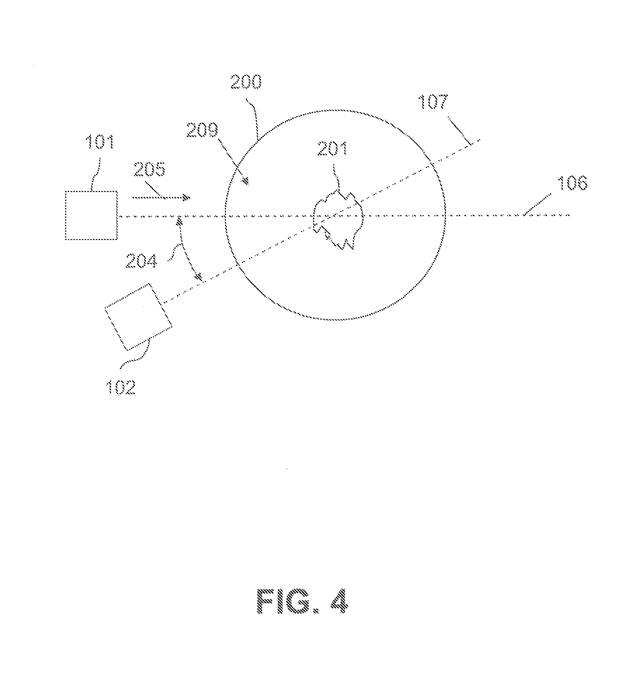

Fig. 4 is a top view of an acoustic sensor device according to yet another typical embodiment. As shown in Fig. 4, two acoustic paths are provided, i.e. a transmission path 106 and a receiving path 107. The acoustic sensor device 100 shown in Fig. 4 provides a flame boundary detection in the reflection mode, wherein a detection angle between the measurement path 105 and the transmission path 106 (reference numeral 204) may be adjusted.

Thus, the transmission direction and the receiving direction of the acoustic waves can be adjusted to be different from each other. Furthermore, it is possible, albeit not shown in Fig. 4, to provide more than one acoustic receiver 102 in order to detect the flame boundary from different detection angles 204. Thus, one acoustic wave 205 which is transmitted from the acoustic transmitter 101 may be detected at different angles 204 using an appropriate number of acoustic receivers 102.

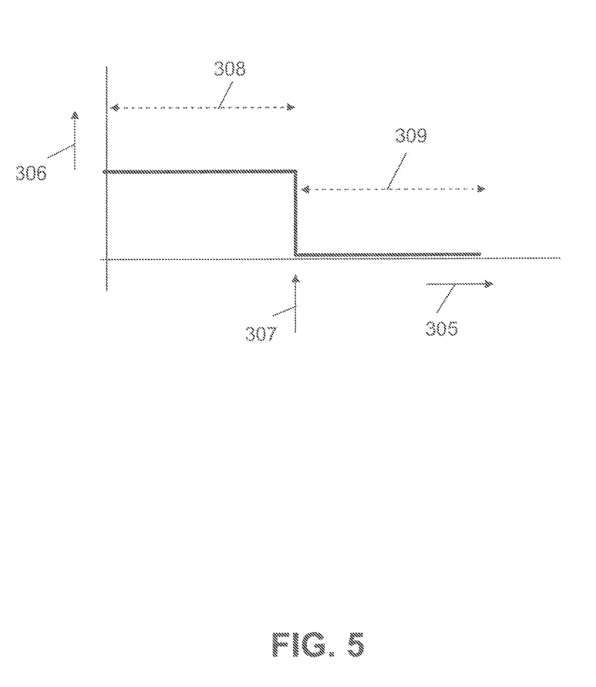

Due to the burning process in the flame 201 to be investigated, very high temperatures can occur inside the flame which drop rapidly outside the flame. This drop region results in a change in acoustic impedance 306, as elucidated in Fig. 5. Fig. 5 is a schematic graph showing the acoustic impedance 306 as a function of a local position 305 along the measurement path 105 (with reference to Figs. 2 and 3) or along the transmission path 106 (with reference to Fig. 4). As mentioned before, the change in the acoustic impedance 306 is not necessarily a step function, but a smooth transition can be provided either.

The transition of a high impedance in a region of ambient air/gas mixture 308, i.e. in an out-of-flame region, and a lower impedance in a region of the flame 201 to be investigated (in-flame region 309) is defined as a flame front position 307. As this flame front position 307 may vary along the acoustic paths 105 and 106, respectively, in accordance with a varying position of the flame boundary (flame flicker), a plurality of variations in the detected reflection and/or transmission acoustic waves may occur.

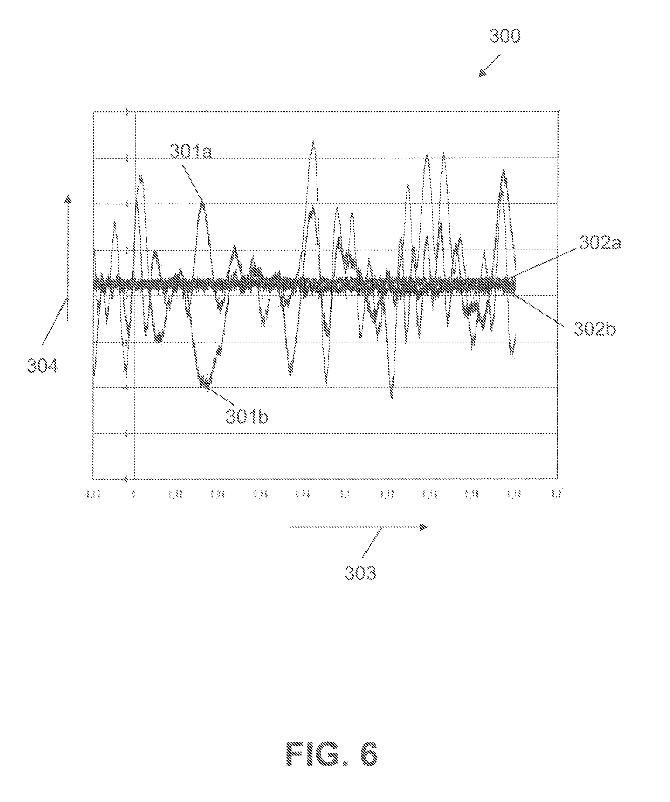

Fig. 6 is a graph showing different receiver signals 310 measured in a reflection mode wherein the set-up of the acoustic sensor device 100 has been arranged similar to that shown in Fig. 4. In the graph of Fig. 6, a detected acoustic signal intensity 304 is shown as a function of time 303 (elapsed time in seconds). Essentially, the curves of four detected receiver signals are shown (signals 301a, 301b, 302a and 302b). The two flame detection signals 301a, 301b show strong variations in accordance with e.g. a flicker frequency (pulsation frequency) of the flame 201 to be investigated. Typical flicker or pulsation frequencies range from some Hz to few kHz. From these signals, it may be evaluated that a flame is present. Furthermore a flame structure may be evaluated from the varying detected receiver signals. In addition to that, chemical reactions may modify the received acoustic wave as chemical reactions may have an influence on fluid properties. Therefore, at the border of the flame, a rapid change of material/fluid properties can occur which is also seen in the acoustic impedance itself in accordance with equation (1) above.

On the other hand, no-flame detection signals 302a and 302b show very few variations at a low detected signal intensity 304. The signals which correspond to the curves 302a and 302b have been acquired when the flame 201 has been switched off, i.e. when no flame is present at all. The detection signal 302a corresponds to a measurement in air, whereas the detection signal 302b corresponds to a measurement of an air-fuel mixture when no flame is present. From a comparison of the flame detection signals 301a, 301b which have been acquired at different points in time, with the no-flame detection signals 302a, 302b, the presence of a flame can be securely detected. The statistical properties of the flame detection signals 301a, 301b may be used in order to evaluate a flicker frequency of the flame 201 to be investigated.

As can be seen from the flame detection signals 301a, 301b which have been acquired at different points in time, it is possible to detect acoustic patterns generated by the flame 201 to be investigated. These acoustic patterns exhibit a specific pulsation of the flame 201 and of the air-fuel mixture within the flame and in the environment of the flame 201. In some cases the flame 201 and its environment may act as an acoustic resonator. The acoustic pattern may be detected by Fourier analysis and/or by pattern matching/ pattern recognition algorithms.

Furthermore, an actual position of the flame boundary, i.e. the interface region between the medium of the flame 201 to be investigated and the ambient medium 209, may be evaluated. From the time measurement in accordance with the graph in Fig. 6, additional information about the flame 201 to be investigated can be derived. From the time measurement, the position of the flame and any movement, especially flickering of the flame, is detectable.

In security applications, where multi-burner configurations are used, the state of each flame has to be detected continuously by an acoustic sensor device 100 according to one of the described embodiments. A fuel supply to a specific flame has to be switched off as soon as the flame is not detected any more by means of the acoustic sensor device 100. A specific advantage of the use of acoustic waves 205 for the detection of a status of a flame is that coatings on transmitting components such as the impedance matching units 203 only have a minor effect on the measurement sensitivity.

The burners generating the flames 201 to be investigated may be heating devices such as small or large boilers or may be larger multi-burner configurations employed in industry or power plants. Furthermore, a performance of gas turbines may be monitored using the flame detection device in accordance with at least one of the typical embodiments described above.

The processing unit of the sensor device may, further, be coupled to a flame controller, such as a fuel and/or oxygen supply apparatus for the flame. In particular, the flame controller may cause, in response to the detected operating condition, an adjustment of the amount, a composition and/or a mixture of a fuel supply and/or of the oxygen supply to the flame. For example, in the case of a gas turbine, the processing unit of the sensor device may be coupled to a gas turbine controller of the gas turbine, such that the turbine controller is enabled to control the gas turbine, more specifically the flame as described above, in response to an operation condition of the flame which has been detected by the flame detection device.

Furthermore, time-of-flight measurements may be provided easily in order to detect a position and/or a flicker frequency of the flame. A further advantage of the acoustic sensor device 100 as compared to e.g. optical sensor devices is that an optical emission of the flame cannot disturb the measurement. Furthermore, no cooling system is required and a rigid sensor set-up can be provided. As the flame front acts as an acoustic reflector, the properties of the flame front, e.g. its position and modification in the course of time, can be detected.

From the transmitted and/or reflected acoustic waves, a lateral extension of the flame 201 to be investigated may be derived. Furthermore, a temperature distribution in the flame may be derived from the acoustic impedance using the equations (1) and (5) described above.

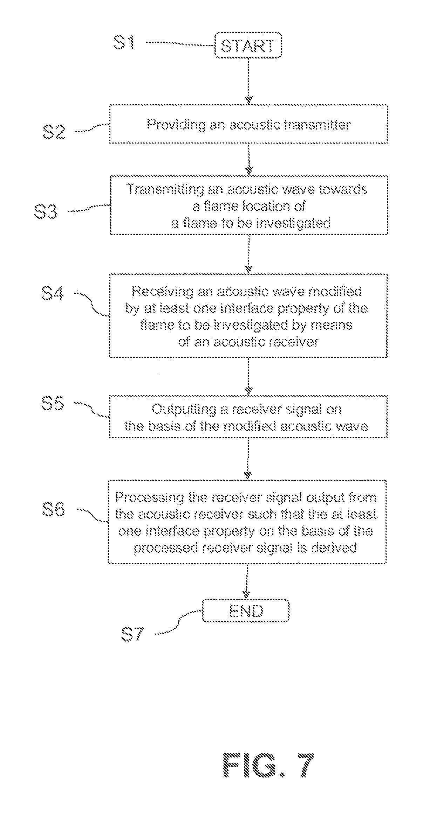

Fig. 7 is a flowchart illustrating a method for detecting at least one property of an interface between a flame medium of a flame to be investigated and an ambient medium of the flame to be investigated. The procedure starts at a step S1, wherein at a step S2 an acoustic transmitter is provided. The acoustic transmitter transmits an acoustic wave towards a flame location of the flame 201 to be investigated (step S3).

Then, the procedure advances to a step S4 where a modified acoustic wave is received. The acoustic wave is modified by at least one interface property of the flame to be investigated. An acoustic receiver which receives the modified acoustic wave and outputs a receiver signal 310 on the basis of the modified acoustic wave (step S5).

Then the procedure advances to a step S6 where the receiver signal 310 output from the acoustic receiver is processed such that the at least one interface property of an interface between a flame medium of the flame 201 to be investigated and an ambient medium of the flame 201 can be derived on the basis of the processed receiver signal 310. The procedure ends at a step S7.

A flame position and/or a flame fluctuation may be determined on the basis of the processed receiver signal 310. Deriving the at least one interface property in accordance with the step S6 above may include measuring time delay and/or a phase offset between the transmitted and the received acoustic waves, such that a time-of-flight signal is obtained therefrom. This has the advantage that a position of the flame boundary (the flame front 307), i.e. the interface between the flame medium of the flame 201 to be investigated and the ambient medium 209 (see Figs. 2, 3 and 4), can be evaluated.

The invention has been described on the basis of embodiments which are shown in the appended drawings and from which further advantages and modifications emerge. However, the disclosure is not restricted to the embodiments described in concrete terms, but rather can be modified and varied in a suitable manner. It lies within the scope to combine individual features and combinations of features of one embodiment with features and combinations of features of another embodiment in a suitable manner in order to arrive at further embodiments.

It will be apparent to those skilled in the art, based upon the teachings herein, that changes and modifications may be made without departing from the disclosure and its broader aspects. That is, all examples set forth herein above are intended to be exemplary and non-limiting.

## REFERENCE NUMERALS

| No. | Part/step |
| --- | --- |
| 100 | acoustic sensor device |
| 101 | acoustic transmitter |
| 102 | acoustic receiver |
| 103 | acoustic waveguide |
| 104 | transceiver unit |
| 105 | measurement path |
| 106 | transmission path |
| 107 | receiving path |

(continued)

| No. | Part/step |
| --- | --- |
| 108 | antenna |
| 109 | processing unit |
| 200 | burning chamber |
| 201 | flame to be investigated |
| 202 | burner |
| 203 | impedance matching unit |
| 204 | detection angle |
| 205 | acoustic wave |
| 206 | signal propagation direction |
| 207 | non-burning region |
| 208 | burning region |
| 209 | ambient medium |
| 300 | measurement diagram |
| 301 a, 301 b | flame detection signal |
| 302a, 302b | no-flame detection signal |
| 303 | elapsed time |
| 304 | detected signal intensity |
| 305 | local position |
| 306 | acoustic impedance |
| 307 | flame front position |
| 308 | region of air/gas mixture |
| 309 | flame region |
| 310 | receiver signal |

**Claims**

1. An acoustic sensor device (100) adapted for detecting at least one property of an interface between a flame medium of a flame (201) to be investigated and an ambient medium of the flame (201), the sensor device (100) comprising:

   an acoustic transmitter (101) adapted for transmitting an acoustic wave (105) towards a flame location of the flame (201);
   an acoustic receiver (102) adapted for receiving a modified acoustic wave from the flame location and for outputting a receiver signal on the basis of the modified acoustic wave; and
   a processing unit operatively connected to the acoustic receiver (102) and adapted for processing the outputted receiver signal and for deriving the at least one interface property of the interface between the flame medium of the flame (201) and an ambient medium of the flame (201) on the basis of the processed receiver signal.

2. The acoustic sensor device (100) in accordance with claim 1, wherein the acoustic transmitter (101) is adapted for transmitting the acoustic wave (105) as a continuous wave.

3. The acoustic sensor device (100) in accordance with claim 1, wherein the acoustic transmitter (101) is adapted for transmitting the acoustic wave (105) as a pulsed wave.

4. The acoustic sensor device (100) in accordance with any one of the preceding claims, wherein the acoustic transmitter (101) and the acoustic receiver (102) are provided as an integrated transceiver unit (104).

5. The acoustic sensor device (100) in accordance with any one of the preceding claims, wherein the at least one flame interface property comprises an on/off state of the flame (201).

6. The acoustic sensor device (100) in accordance with any one of the preceding claims, wherein the at least one flame interface property comprises a flicker frequency of the flame (201).

7. The acoustic sensor device (100) in accordance with any one of the preceding claims, wherein the at least one flame interface property comprises a location of the flame interface and/or a lateral extension of the flame (201).

8. The acoustic sensor device (100) in accordance with any one of the preceding claims, wherein the at least one flame interface property comprises a temperature distribution in the flame medium of the flame (201).

9. The acoustic sensor device (100) in accordance with any one of the preceding claims, wherein the modified acoustic wave from the flame location is a reflected wave reflected at the flame boundary (307).

10. The acoustic sensor device (100) in accordance with any one of the preceding claims, further comprising an acoustic waveguide (103) adapted for transmitting the acoustic wave (105) from the acoustic transmitter (101) towards the flame location of the flame (201) to be investigated.

11. The acoustic sensor device (100) in accordance with claim 10, further comprising an impedance matching unit (203) adapted for matching an acoustic impedance of the acoustic waveguide (103) to an acoustic impedance of an ambient medium in a burning chamber (200).

12. A method for detecting at least one property of an interface between a flame medium of a flame (201) to be investigated and an ambient medium of the flame (201), the method comprising:

    providing an acoustic transmitter (101);
    transmitting an acoustic wave (105) from the acoustic transmitter (101) towards a flame location of the flame (201);
    receiving a modified acoustic wave from the flame location by means of an acoustic receiver (102);
    outputting a receiver signal on the basis of the modified acoustic wave; and
    processing the receiver signal output from the acoustic receiver (102) such that the at least one interface property of the interface between the flame medium of the flame (201) and an ambient medium of the flame (201) is derived on the basis of the processed receiver signal.

13. The method in accordance with claim 12, wherein at least one of a flame position, a flame fluctuation, a chemical reaction within the flame (201) and a flame flicker frequency is determined on the basis of the processed receiver signal.

14. The method in accordance with claim 12 or 13, wherein deriving the at least one interface property includes measuring a time delay and/or a phase offset between the transmitted and the received acoustic wave, such that a time-of-flight signal is obtained therefrom.

15. A multi-sensor apparatus adapted for detecting at least one property of an interface between a plurality of flames (201) to be investigated and ambient media of the plurality of flames (201), comprising a plurality of acoustic sensor devices (100) according to any one of the claims 1 to 11.

FIG. 1

FIG. 2

FIG. 3

FIG. 4

FIG. 5

FIG. 6

```
                        ┌─────────────┐
            S1 ·········│    START    │
                        └─────────────┘
                               ┊
                               ▼
                 ┌───────────────────────────────┐
            S2 ──│  Providing an acoustic transmitter  │
                 └───────────────────────────────┘
                               ┊
                               ▼
                 ┌───────────────────────────────┐
                 │  Transmitting an acoustic wave towards  │
            S3 ──│        a flame location of       │
                 │      a flame to be investigated    │
                 └───────────────────────────────┘
                               ┊
                               ▼
                 ┌───────────────────────────────┐
                 │   Receiving an acoustic wave modified  │
            S4 ──│  by at least one interface property of the  │
                 │  flame to be investigated by means  │
                 │        of an acoustic receiver    │
                 └───────────────────────────────┘
                               ┊
                               ▼
                 ┌───────────────────────────────┐
            S5 ──│    Outputting a receiver signal on    │
                 │   the basis of the modified acoustic wave │
                 └───────────────────────────────┘
                               ┊
                               ▼
                 ┌───────────────────────────────┐
                 │  Processing the receiver signal output from │
            S6 ──│  the acoustic receiver such that the at least │
                 │  one interface property on the basis of the │
                 │     processed receiver signal is derived  │
                 └───────────────────────────────┘
                               ┊
                               ▼
                        ┌─────────────┐
                        │     END     │
                        └─────────────┘
            S7 ·········
```

# FIG. 7

Europäisches
Patentamt

European
Patent Office

Office européen
des brevets

**EUROPEAN SEARCH REPORT**

Application Number

EP 08 17 0452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 304 525 A (NIPPON KOKAN KK [JP]) 23 April 2003 (2003-04-23) * paragraphs [0005], [0050] - [0060], [0093], [0094] * | 1,5-8, 12-15 | INV. F23N5/16 |
| X | GB 950 210 A (ELCONTROL LTD) 19 February 1964 (1964-02-19) * page 1, line 8 - line 10 * * page 1, line 29 - line 50 * * page 1, line 55 - line 60 * * page 2, line 46 - line 61 * | 1,2,5,6, 9-13 | |
| X | JP 61 265540 A (TOKYO ELECTRIC POWER CO; MITSUBISHI HEAVY IND LTD) 25 November 1986 (1986-11-25) * abstract; figures 1-5 * | 1,2,4,8, 12-15 | |
| X | EP 0 304 170 A (BABCOCK & WILCOX CO [US]) 22 February 1989 (1989-02-22) * page 4, line 45 - line 52 * * page 6, line 16 - line 20 * * page 6, line 39 - line 41 * * claim 2 * | 1,3,8, 10,15 | TECHNICAL FIELDS SEARCHED (IPC) F23N G01K |
| X | WO 2006/030011 A (SIEMENS AG [DE]; BRUMMEL HANS-GERD [US]; LINNERT UWE [DE]; NEWERLA KLA) 23 March 2006 (2006-03-23) * page 1, paragraphs 2,3 * * page 2, line 15 - line 27 * * page 3, line 25 - line 27 * * page 5, line 27 - line 30 * * page 7, line 11 - line 17 * * page 10, line 15 - line 21 * * page 11, line 27 - page 12, line 8 * | 1,3,4,8, 10,11 | |

-/--

The present search report has been drawn up for all claims

| Place of search | Date of completion of the search | Examiner |
|---|---|---|
| The Hague | 7 May 2009 | Mougey, Maurice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## EUROPEAN SEARCH REPORT

Application Number

EP 08 17 0452

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/052295 A1 (DRAXTON DEAN E [US] ET AL DRAXTON DEAN E [US] ET AL) 18 March 2004 (2004-03-18) * paragraphs [0008], [0011], [0027] - [0029], [0086], [0087]; figures 6,7,22,24 * | 1-3,7,8, 12-15 | |
| X | US 4 655 608 A (GOSS LARRY P [US] ET AL) 7 April 1987 (1987-04-07) * column 1, line 13 - line 17 * * column 2, line 24 - line 43; figure 1 * | 1,3,12, 13 | |
| X | US 4 513 749 A (KINO GORDON S [US] ET AL) 30 April 1985 (1985-04-30) * column 2, line 61 - column 3, line 14 * * column 3, line 51 - line 52 * | 1,8,12, 13 | |
| X | EP 1 411 298 A (INVEST Y COOPERACION IND DE AN [ES]) 21 April 2004 (2004-04-21) * paragraphs [0001], [0012] * | 1,5,12, 13 | |
| X | GB 2 275 109 A (TELEFUNKEN MICROELECTRON [DE]) 17 August 1994 (1994-08-17) * page 1, line 26 - page 2, line 18 * * page 5, line 24 - line 31 * * page 6, line 15 - line 22 * | 1,4,5,7, 8,12-14 | TECHNICAL FIELDS SEARCHED (IPC) |

The present search report has been drawn up for all claims

| Place of search | Date of completion of the search | Examiner |
|---|---|---|
| The Hague | 7 May 2009 | Mougey, Maurice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 17 0452

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2009

| Patent document cited in search report | | Publication date | Patent family member(s) | | Publication date |
|---|---|---|---|---|---|
| EP 1304525 | A | 23-04-2003 | WO | 0202992 A1 | 10-01-2002 |
| GB 950210 | A | 19-02-1964 | NONE | | |
| JP 61265540 | A | 25-11-1986 | JP | 1845729 C | 25-05-1994 |
| | | | JP | 5058123 B | 25-08-1993 |
| EP 0304170 | A | 22-02-1989 | BR | 8802424 A | 28-02-1989 |
| | | | CA | 1315386 C | 30-03-1993 |
| | | | JP | 1068627 A | 14-03-1989 |
| | | | JP | 1989805 C | 08-11-1995 |
| | | | JP | 7013583 B | 15-02-1995 |
| | | | US | 4848924 A | 18-07-1989 |
| WO 2006030011 | A | 23-03-2006 | CN | 101023334 A | 22-08-2007 |
| | | | DE | 102004045199 A1 | 30-03-2006 |
| | | | EP | 1789767 A1 | 30-05-2007 |
| | | | JP | 2008513865 T | 01-05-2008 |
| US 2004052295 | A1 | 18-03-2004 | NONE | | |
| US 4655608 | A | 07-04-1987 | NONE | | |
| US 4513749 | A | 30-04-1985 | EP | 0125309 A1 | 21-11-1984 |
| | | | JP | 60500122 T | 31-01-1985 |
| | | | WO | 8401890 A1 | 24-05-1984 |
| EP 1411298 | A | 21-04-2004 | AU | 3178001 A | 27-08-2001 |
| | | | WO | 0161297 A2 | 23-08-2001 |
| | | | ES | 2166312 A1 | 01-04-2002 |
| GB 2275109 | A | 17-08-1994 | DE | 4302531 A1 | 04-08-1994 |
| | | | FR | 2701088 A1 | 05-08-1994 |

EPO FORM P0459

For more details about this annex : see Official Journal of the European Patent Office, No. 12/82